# EUROPÄISCHE PATENTSCHRIFT

(11) **EP 0 834 726 B1**
(45) Veröffentlichungstag und Bekanntmachung des Hinweises auf die Patenterteilung: **07.12.2005**
(21) Anmeldenummer: 97116430.6
(22) Anmeldetag: 20.09.1997
(51) Int. Cl.: G01J 3/50

(54) **Dreibereichs-Verfahren zur analogen Farberkennung und Vorrichtung zum Durchführen des Verfahrens**
Three component method for analogous colour identification and device therefor
Procédé et dispositif à trois composants de reconnaissance de couleurs

(30) Priorität: 02.10.1996 DE 19640671
(43) Veröffentlichungstag der Anmeldung: 08.04.1998
(73) Patentinhaber: Omron Electronics Manufacturing of Germany GmbH, 71154 Nufringen (DE)
(72) Erfinder: Stauss, Gerold, 78052 VS-Villingen (DE)
(74) Vertreter: Patentanwälte Ruff, Wilhelm, Beier, Dauster & Partner

(56) Entgegenhaltungen:
- EP-A- 0 522 548
- US-A- 5 471 052

## Beschreibung

Die Erfindung betrifft ein Dreibereichs - Verfahren zur analogen Farberkennung, bei welchem Lichtstrahlen von drei Lichtsendern in jeweils einer Farbe auf ein zu erkennendes Objekt gerichtet und die von dem Objekt kommenden Lichtstrahlen mittels eines Empfängers aufgenommen werden, dessen Signale mittels einer Signalaufbereitung aufbereitet und als proportionale, analoge Spannungssignale für jede der drei Farben abgegeben werden, und eine Vorrichtung zum Durchführen des Verfahrens.

Bei einem bekannten Verfahren der eingangs genannten Art (US-A 5471052) werden die Lichtleistungen der drei Lichtsender auf konstante Soll-Werte eingeregelt. Diese Soll-Werte werden von einem Mikroprozessor oder von einer anderen Quelle geliefert.

Es ist bei analogen Farberkennungssensoren, die mit dem Dreibereichs-Verfahren arbeiten, bekannt diese vor Inbetriebnahme zu kalibrieren, d.h. die. Soll-Werte für die Lichtleistung festzulegen. Dies erfolgt dadurch, dass zwischen den Sendern und dem Empfänger ein Referenzobjekt angeordnet wird, beispielsweise ein transparentes oder weißes Referenzobjekt. Wenn mittels Transmission gearbeitet wird, kann das "Referenzobjekt" auch darin bestehen, dass kein Objekt in den Strahlengang gebracht wird. Durch Verstellenvon Potentiometern, durch die die Lichtleistung der Sender bzw. deren Verstärkung einstellbar ist, werden die ausgegebenen Spannungssignale auf einen vorgegebenen Wert eingestellt, beispielsweise einen Maximalwert, um den größtmögtichen Signaldruck zu erhalten. Dabei werden auch die Messkanäle aufeinander abgeglichen. Dieses Kalibrieren muss nach einer Ersteinstellung auch wiederholt werden, da Verschmutzungen der Optik sowie altersbedingte und temperaturbedingte Signalveränderungen auftreten.

Das Kalibrieren eines einzelnen Farberkennungssensors erfordert keinen allzu hohen Aufwand. Wenn jedoch beispielsweise innerhalb einer Anlage, beispielsweise einer Flaschenreinigungs- und Abfüllanlage, an einer Vielzahl von Orten und an einer Vielzahl von Objekten eine Farberkennung gefordert wird und eine entsprechende Anzahl von Farberkennungssensoren erforderlich ist, so erweisen sich die bekannten, nach dem Dreibereichs - Verfahren arbeitenden Farberkennungssensoren als ungeeignet. An jedem dieser Farberkennungssensoren muss bei der Installation ein Kalibrieren durchgeführt werden, das auch von Zeit zu Zeit wiederholt werden muss. Dies wäre mit einem nicht mehr vertretbaren Arbeitsaufwand verbunden. Wenn beispielsweise 30 derartiger Farberkennungssensoren innerhalb einer Anlage erforderlich sind, so würde das Kalibrieren das manuelle Einstellen von jeweils drei Potentiometern an jedem Farberkennungssensor erfordern, d.h. insgesamt das Einstellen von 90 Potentiometern. Wegen dieses zu hohen Aufwandes werden für derartige Farberkennungsaufgaben Farberkennungssensoren vorgesehen, die nach anderen Verfahren arbeiten.

Der Erfindung liegt die Aufgabe zugrunde, ein Dreibereichs - Verfahren zur analogen Farberkennung und einen danach arbeitenden Farberkennungssensor so weiter zu bilden, dass ein Arbeitsaufwand für ein Kalibrieren entfällt.

Diese Aufgabe wird dadurch gelöst, dass ein automatisches Kalibrieren durchgeführt wird, bei welchem die Lichtleistung jedes Lichtsenders mittels eines steuerbaren Reglers geregelt wird, der die während einer Referenzmessung gebildeten analogen Spannungssignale als Ist-Werte jeweils mit einem eingegebenen Soll-Wert vergleicht und bei Abweichungen der entsprechenden Ist-Werte von dem jeweiligen Soll-Wert die Lichtleistung des betreffenden Senders nachführt, und dass die aufgrund des Kalibrierens eingestellten Lichtleistungen erfasst und abgespeichert werden und dass danach durch Vergleichen der abgegebenen Lichtleistungen mit den abgespeicherten Werten eine Regelung zum Konstanthalten der Lichtleistung durchgeführt wird.

Das erfindungsgemäße Verfahren ermöglicht es, nach dem Dreibereichs - Verfahren arbeitende analoge Farberkennungssensoren so auszubilden, dass sie sich automatisch kalibrieren, so dass manuelle Arbeiten hierfür nicht mehr erforderlich sind. Es ist somit möglich, nach diesem Verfahren arbeitende Farberkennungssensoren in einer beliebigen Anzahl innerhalb einer Anlage einzusetzen, ohne dass für das Kalibrieren ein Installationsaufwand notwendig ist. Auch ein späterer Wartungsaufwand ist nicht gegeben. Es wird somit die Möglichkeit eröffnet, nach dem Dreibereichs - Verfahren arbeitende analoge Farberkennungssensoren in Bereichen einzusetzen, in denen der Einsatz bisher nicht zweckmäßig war.

Bei einer Vorrichtung zur Lösung der gestellten Aufgabe ist eine automatische Kalibriereinrichtung vorgesehen, die einen steuerbaren Regler enthält, der Mittel zum vergleichen der während einer Referenzmessung gemessenen Ist-Werte der analogen Spannungssignale mit vorgegebenen Soll-Werten und zum Nachführen der Lichtleistung der Sender aufweist, wobei ein weiterer Regelkreis zum Konstanthalten der Lichtleistungen der Sender vorgesehen ist, der die beim Kalibrieren eingeregelten Lichtleistungen als Soll-Werte in einem Speicher abspeichert und mit den Ist-Werten der Lichtleistungen vergleicht. Eine derartige Vorrichtung ist ein analoger Farberkennungssensor, der keine Installationsarbeiten für ein Kalibrieren erfordert. Es genügt, wenn in ihn Soll-Werte für die einem Referenzobjekt zugeordneten analogen Spannungssignale eingegeben werden.

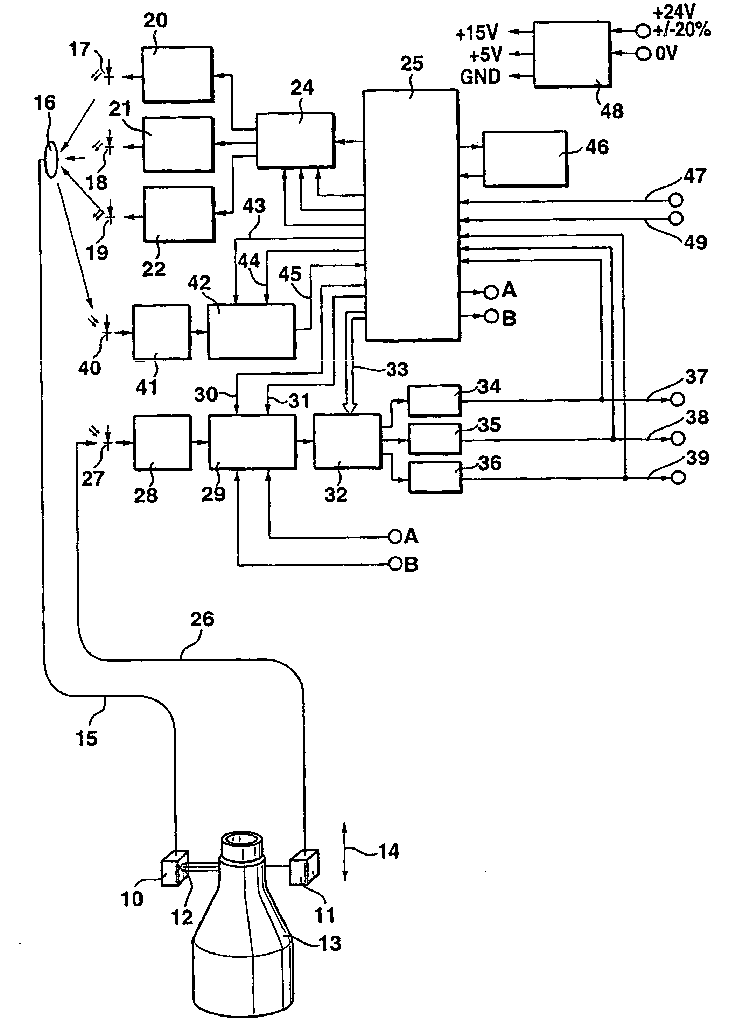

In der Zeichnung ist ein Blockschaltbild für einen erfindungsgemäßen, nach dem Dreibereichs-Verfahren arbeitenden analogen Farberkennungssensor dargestellt.

Der Farberkennungssensor besitzt zwei Meßköpfe 10, 11, die derart angeordnet sind, daß dem optischen Ausgang 12 des Meßkopfes 10 der optische Eingang des Meßkopfes 11 gegenüberliegt. In dem Strahlengang zwischen den Meßköpfen 10 und 11 befindet sich das zu messende Objekt 13, beispielsweise eine Flasche. Die Meßköpfe 10, 11 sind beispielsweise auf einem gemeinsamen Halter angebracht, der entsprechend dem Doppelpfeil 14 anhebbar und absenkbar ist, wobei in der dargestellten abgesenkten Position sich der Flaschenhals in dem Strahlengang zwischen dem Meßkopf 10 und dem Meßkopf 11 befindet.

Der Meßkopf 10 ist mittels eines Lichtleiters 15 an eine Sammellinse 16 angeschlossen, die sequenziell mit dem Licht von drei Sendern 17, 18, 19 beaufschlagt wird, die beispielsweise als Leuchtdioden ausgebildet sind. Die Leuchtdiode 17 sendet rotes Licht, die Leuchtdiode 18 grünes Licht und die Leuchtdiode 19 blaues Licht. Den Leuchtdioden 17, 18, 19 sind jeweils Treiber 20, 21, 22 vorgeschaltet, denen mittels eines Multiplexers 24 pulsweitenmodulierte Signale zugeführt werden, die von einem Microprozessor 25 gebildet werden.

Der Meßkopf 11 ist mittels eines Lichtleiters 26 an einen Empfänger 27 angeschlossen, insbesondere an eine Fotodiode. Die Signale der Fotodiode 27 werden mittels eines Vorverstärkers 28 vorverstärkt und an eine Signalaufbereitung 29 weitergeleitet. Die Signalaufbereitung 29 enthält beispielsweise zwei mittels Signalleitungen A, B auswählbare Verstärkerstufen, einen Kammfilter und einen Peakholder, der die Spitzenwerte der von dem Empfänger 27 empfangenen roten, grünen und blauen Lichtanteile hält. Der Kammfilter und der Peakholder werden von dem Microprozessor 25 erzeugte Steuersignale mittels Steuerleitungen 30, 31 zugeführt. Die aufbereiteten Signale werden einem Discriminator 32 zugeführt, der über Steuerleitungen 33 von dem Microprozessor 25 Steuersignale erhält. Der Discriminator 32, der die erhaltenen Signale demultiplext, weist eine sample-hold-Funktion auf, d.h. er hält jeweils den letzten der Werte. Diese Werte werden an Spannungsfolger 34, 35, 36 ausgegeben, die somit analoge Spannungswerte 37, 38, 39 entsprechend der roten, grünen, blauen Lichtanteile ausgeben, die von dem Empfänger 27 empfangen wurden.

Für die weitere Auswertung der analogen Spannungssignale 37, 38, 39 des Farberkennungssensors ist es zweckmäßig, wenn dieser kalibriert wird, d.h. das analoge Spannungssignal 37 bei einem roten Meßobjekt 13 einen definierten Spannungswert hat, das analoge Signal 38 bei einem grünen Meßobjekt einen definierten Spannungswert hat und das analoge Signal 39 bei einem blauen Meßobjekt 13 einen definierten Spannungswert hat. Diese definierten Spannungswerte sollten einerseits möglichst hoch sein, um einen großen Signalhub zu erhalten, und andererseits auch aufeinander abgeglichen sein. Dieses Kalibrieren erfolgt, wenn zwischen den Meßköpfen 10, 11 ein bezüglich seiner Farbe bekanntes Referenzobjekt angeordnet wird, beispielsweise ein transparentes Meßobjekt 13 oder auch kein Meßobjekt, so daß der Strahlengang zwischen den Meßköpfen 10, 11 nicht unterbrochen ist. Bei dem Ausführungsbeispiel kann dies beispielsweise dadurch erfolgen, daß die auf einem Halter angeordneten Meßköpfe 10, 11 entsprechend Pfeil 14 nach oben verfahren werden.

Um die definierten analogen Spannungssignale 37, 38, 39 zu erhalten, wird beim Messen eines Referenzobjektes die Lichtleistung der Sender 17, 18, 19 so eingestellt, daß die definierten Spannungssignale 37, 38, 39 vorliegen. Dieses Einstellen oder besser Einregeln erfolgt dadurch, daß die Spannungssignale 37, 38, 39 dem Microprozessor 25 zugeführt werden, in welchem die Sollwerte der Spannungssignale 37, 38, 39 beispielsweise als Konstante in einem ROM abgelegt sind. In dem Microprozessor 25 werden die Sollwerte mit den Istwerten der Spannungssignale 37, 38, 39 verglichen. Das von dem Microprozessor 25 über den Multiplexer 24 den Treibern 20, 21, 22 bezüglich der Pulsweite modulierte Signal wird für jeden der Sender 17, 18, 19 so lange verändert, bis die Spannungssignale 37, 38, 39 den abgelegten Sollwerten entsprechen.

Die nach dem Kalibrieren vorhandene Lichtleistung der Sender 17, 18, 19 wird mittels eines weiteren Empfängers 40, insbesondere einer Fotodiode, erfaßt. Der Empfänger 40 nimmt beispielsweise von der Sammellinse 16 reflektiertes Licht auf. Das Signal des Empfängers 40 wird mittels eines Vorverstärkers 41 vorverstärkt und an eine Signalaufbereitung 42 gegeben. Diese Signalaufbereitung 42 enthält ein mittels einer Steuerleitung 43 von dem Microprozessor 25 gesteuertes Kammfilter und einen mittels einer Steuerleitung 44 von dem Microprozessor 25 gesteuerten Peakholder. Dieser aufbereiteten Signale werden in einem löschbaren Speicher 46 abgelegt, insbesondere in einem EEPROM. Diese Signale sind analog zu der durch das Kalibrieren eingestellten Lichtleistung der Sender 17, 18, 19.

Die in dem Speicher 46 abgelegten Signale werden benutzt, um die Sender 17, 18, 19 jeweils auf eine konstante Lichtleistung einzuregeln. Hierzu werden fortlaufend die von dem Empfänger 40 empfangenen und aufbereiteten Signale dem Microprozessor 25 zugeführt, der diese mit den in dem Speicher 46 abgespeicherten Signalen vergleicht, die als Sollwerte dienen. Bei Abweichungen zwischen den Istwerten der Lichtleistungen der Lichtsender 17, 18 oder 19 von den Sollwerten erfolgt eine Pulsweitenmodulation, bis diese Abweichung wieder aufgehoben ist. Die Lichtleistungen der Lichtsender werden bis zu dem nächsten Kalibriervorgang konstant gehalten. Wenn ein Kalibriervorgang dazu führt, daß die Lichtleistung eines oder mehrerer der Lichtsender 17, 18 oder 19 verändert wird, so wird der bisher geltende Wert in dem Speicher 46 gelöscht und durch den neuen, von dem Empfänger 40 aufgenommenen Wert ersetzt.

Der vorstehend beschriebene Kalibriervorgang wird mittels eines Startsignals 47 ausgelöst und läuft dann voll automatisch ab. Dieser Kalibriervorgang ist bei der Erstinbetriebnahme des Farberkennungssensors erforderlich, so daß es zweckmäßig ist, das Startsignal 47 mit dem Einschalten der Spannungsversorgung 48 auszulösen. Darüber hinaus ist es sinnvoll, den Kalibriervorgang von Zeit zu Zeit zu wiederholen. Beispielsweise kann vorgesehen werden, daß hierzu eine Starttaste gedrückt wird, die das Kalibriersignal 47 gibt. Bei einer anderen Ausführungsform wird vorgesehen, daß das Startsignal 47 mit Hilfe einer Zeitschaltung nach einer vorgebbaren Betriebszeit ausgelöst wird. Es ist auch möglich, das Startsignal 47 in anderer Weise auszulösen, beispielsweise mittels eines Endschalters, der die angehobene Position der Meßköpfe 10, 11 überwacht. Dieser Endschalter kann bei jedem Erreichen der angehobenen Position oder nach einer vorgebbaren Anzahl des Erreichens der angehobenen Position einen Kalibriervorgang auslösen.

Bei dem erfindungsgemäßen Farbsensor ist ferner vorgesehen, daß die Verstärkungsstufen der Signalaufbereitung 29 auswählbar sind. Dieses erfolgt mittels eines Auswahlsignals 48 für diese Verstärkungswahl, das in den Microprozessor 25 eingegeben wird, der dann entsprechend die Signalleitungen A, B beaufschlagt. Das Auswahlsignal kann beispielsweise von der Bedienungsperson gegeben werden, wenn sie feststellt, daß das Meßobjekt bei der bisher gewählten Verstärkungsstufe kein ausreichend deutliches Signal hervorruft. Es kann dann auf eine deutlich höhere Verstärkung umgeschaltet werden.

## Patentansprüche

1. Dreibereichs-Verfahren zur analogen Farberkennung, bei welcher Lichtstrahlen von drei Lichtsendern (17, 18, 19) in jeweils einer Farbe auf ein zu erkennendes Objekt (13) gerichtet und die von dem Objekt kommenden Lichtstrahlen mittels eines Empfängers (27) aufgenommen werden, dessen Signale mittels einer Signalaufbereitung aufbereitet und als proportionale, analoge Spannungssignale (37, 38, 39) für jede der drei Farben ausgegeben werden, **dadurch gekennzeichnet, dass** ein automatisches Kalibrieren durchgeführt wird, bei welchem die Lichtleistung jedes Lichtsenders (17, 18, 19) mittels eines steuerbaren Reglers geregelt wird, der die während einer Referenzmessung gebildeten analogen Spannungssignale als Istwerte jeweils mit einem eingegebenen Sollwert vergleicht und bei Abweichungen der entsprechenden Istwerte von dem jeweiligen Sollwert die Lichtleistung des betreffenden Senders (17, 18, 19) nachführt, und dass die aufgrund des Kalibrierens eingestellten Lichtleistungen erfasst und abgespeichert werden und dassdanach durch Vergleichen der abgegebenen Lichtleistungen mit den abgespeicherten Werten eine Regelung zum Konstanthalten der Lichtleistung durchgeführt wird.

2. Verfahren nach Anspruch 1, **dadurch gekennzeichnet, dass** das Kalibrieren mittels eines in den Regler eingebbaren Startsignals ausgelöst wird.

3. Verfahren nach Anspruch 2, **dadurch gekennzeichnet, dass** das Startsignal nach Ablauf einer vorgebbaren Betriebszeit automatisch gebildet wird.

4. Verfahren nach Anspruch 2, **dadurch gekennzeichnet, dass** das Startsignal mit dem Einschalten einer Stromversorgung automatisch gebildet wird.

5. Dreibereichs-Farberkennungssensor, der drei auf ein zu erkennendes Objekt zu richtende Lichtsender (17, 18, 19) und einen die von dem Objekt kommenden Strahlen aufnehmenden Empfänger (27) aufweist, der an eine proportionale, analoge Spannungssignale (37, 38, 39) für jede der Farben ausgebende Auswerteeinrichtung angeschlossen ist, **dadurch gekennzeichnet, dass** für ein automatische Kalibrieren ein Regelkreis mit einem steuerbaren Regler vorgesehen ist, der Mittel zum Vergleichen von während einer Referenzmessung gemessenen Ist-Werten der analogen Spannungssignale (37, 38, 39) mit vorgegebenen Soll-Werten und, um die Ist-Werte der Spannungssignale auf die Soll-Werte einzuregeln, Mittel zum Nachführen der Lichtleistung der Sender (17, 18, 19) enthält, und dass ein weiterer Regelkreis zum Konstanthalten der Lichtleistungen der Sender (17, 18, 19) vorgesehen ist, der die beim Kalibrieren eingeregelten Lichtleistungen als Soll-Werte in einem Speicher (46) abspeichert und mit den Ist-Werten der Lichtleistungen vergleicht.

6. Sensor nach Anspruch 5, **dadurch gekennzeichnet, dass** die Signalaufbereitung (29) wenigstens zwei unterschiedliche Verstärkungsstufen enthält, die mittels eines Auswahlsignals (48) auswählbar sind.

## Claims

1. A triband method for analog color recognition, under which monochromatic light beams from three light emitters (17, 18, 19) are directed at an object (13) whose color is to be recognized and light rays coming from the object are received by a detector (27) whose signals are processed by a signal processor and output in the form of proportional, analog, voltage signals (37, 38, 39), one for each of the three colors, wherein an automatic calibration, under which the light output of every light emitter (17, 18, 19) is regulated by a controllable regulator that compares the amplitudes of the respective analog voltage signals generated during a reference run to input setpoints and corrects the light output(s) of the emitter(s) (17, 18, 19) involved if the amplitude of any signal should deviate from its setpoint, is performed and the light outputs set as a result of the calibration are acquired and saved and subsequently fed to a regulator for the purpose of maintaining emitted light outputs constant by comparing them to their saved values.

2. A method according to claim 1, wherein calibration is triggered by a start signal that may be input to the regulator.

3. A method according to claim 2, wherein the start signal is automatically generated once a presettable run time has elapsed.

4. A method according to claim 2, wherein the start signal is automatically generated when a power supply is switched on.

5. A triband color-recognition sensor having light emitters (17, 18, 19) to be directed at an object whose color is to be recognized and a detector (27) that receives light rays coming from the object and is connected to a signal analyzer that outputs a proportional, analog, voltage signal (37, 38, 39) for every color, wherein a regulation loop having a controllable regulator that contains means for comparing the amplitudes of analog voltage signals (37, 38, 39) measured during a reference run to preset setpoints is provided in order to allow automatic calibration, means for correcting the light outputs of the emitters (17, 18, 19) are provided in order to allow adjusting the amplitudes of those voltage signals to agree with those setpoints, and a further regulation loop for maintaining the light outputs of the emitters (17, 18, 19) constant that saves the corrected light outputs set during calibration to a memory (46) as setpoints and compares their actual light outputs thereto is provided.

6. A sensor according to claim 5, wherein the signal processor (29) contains at least two discrete amplification stages that may be selected by means of a selection signal (48).

## Revendications

1. Procédé de colorimétrie analogique à trois zones, dans lequel des rayons lumineux en provenance de trois émetteurs lumineux (17, 18, 19) d'une couleur chacun sont dirigés vers un objet (13) à identifier et les rayons lumineux en provenance de l'objet sont captés par un récepteur (27) dont les signaux sont traités par un traitement de signaux et émis sous la forme de signaux de tension analogiques proportionnels (37, 38, 39) pour chacune des trois couleurs, **caractérisé en ce qu'**un étalonnage automatique est effectué, lors duquel le flux lumineux de chaque émetteur (17, 18, 19) est réglé à l'aide d'un réglage à commande, qui compare les signaux de tension analogiques formés durant une mesure de référence, en tant que valeurs réelles, à autant de valeurs de référence fournies et qui, en cas de différence entre les valeurs réelles et leurs valeurs de référence respectives, adapte le flux lumineux de l'émetteur lumineux (17, 18, 19) concerné, et **en ce que** les flux lumineux réglés sur la base de l'étalonnage sont saisis et enregistrés, et **en ce qu'**ensuite, par comparaison des flux lumineux émis avec les valeurs enregistrées, un réglage destiné à maintenir constant le flux lumineux est effectué.

2. Procédé selon la revendication 1, **caractérisé en ce que** l'étalonnage est déclenché par un signal de départ qui peut être fourni au réglage.

3. Procédé selon la revendication 2, **caractérisé en ce que** le signal de départ est formé automatiquement à l'issue d'une durée de fonctionnement qui peut être fournie d'avance.

4. Procédé selon la revendication 2, **caractérisé en ce que** le signal de départ est formé automatiquement à l'enclenchement d'une alimentation électrique.

5. Capteur de colorimètre à trois zones présentant trois émetteurs lumineux (17, 18, 19) à diriger vers un objet à identifier et un récepteur (27) qui capte les rayons lumineux en provenance de l'objet, raccordé à un dispositif d'interprétation émettant des signaux de tension analogiques proportionnels (37, 38, 39) pour chacune des couleurs, **caractérisé en ce qu'**un circuit de réglage est prévu, qui est pourvu, en vue d'un étalonnage automatique, d'un réglage à commande qui comporte un moyen de comparer des valeurs réelles des signaux de tension analogiques (37, 38, 39) mesurées lors d'une mesure de référence à des valeurs de référence préalablement fournies et qui comporte, pour aligner les valeurs réelles des signaux de tension sur les valeurs de référence, un moyen d'adapter le flux lumineux des émetteurs (17, 18, 19), et **en ce qu'**un autre circuit de réglage est prévu pour maintenir constants les flux lumineux des émetteurs (17, 18, 19), qui enregistre dans une mémoire (46) les flux lumineux réglés lors de l'étalonnage, en tant que valeurs de référence, et les compare aux valeurs réelles des flux lumineux.

6. Capteur selon la revendication 5, **caractérisé en ce que** le traitement de signaux (29) comporte au moins deux degrés d'amplification différents qui peuvent être sélectionnés à l'aide d'un signal de sélection (46).
